# EUROPÄISCHE PATENTSCHRIFT

(11) **EP 1 685 756 B1**
(45) Veröffentlichungstag und Bekanntmachung des Hinweises auf die Patenterteilung: **30.04.2008**
(21) Anmeldenummer: 06001498.2
(22) Anmeldetag: 25.01.2006
(51) Int. Cl.: A01D 41/14, A01D 43/08, A01D 45/02

(54) **Selbstfahrende landwirtschaftliche Erntemaschine**
Self-propelled agricultural harvesting machine
Moissonneuse agricole automotrice

(30) Priorität: 27.01.2005 DE 102005004004
(43) Veröffentlichungstag der Anmeldung: 02.08.2006
(73) Patentinhaber: Maschinenfabrik Bernard Krone GmbH, 48480 Spelle (DE)
(72) Erfinder: Krone, Bernard, Dr.-Ing. E.h., 48480 Spelle (DE); Horstmann, Josef, Dr.-Ing., 49479 Ibbenbüren (DE); Overmeyer, Bernward, Dipl.-Ing., 49497 Mettingen (DE); Ester, Markus, Dipl.-Ing., 48480 Lünne (DE)

(56) Entgegenhaltungen:
- EP-A- 0 541 173
- EP-A- 1 008 291
- EP-A- 1 378 160
- DE-A1- 19 933 779
- DE-C1- 10 103 595
- FR-A- 2 563 406
- US-A1- 2004 123 575

## Beschreibung

Die Erfindung bezieht sich auf eine selbstfahrende landwirtschaftliche Erntemaschine nach dem Oberbegriff des Anspruchs 1, welche ein Erntegerät umfasst, dass insbesondere durch seine Gestaltung und Flexibilität die Leistungsfähigkeit der Erntemaschine erheblich steigert. Erntemaschinen der zuvor genannten Art gibt es in zahlreichen Ausführungsformen, vorzugsweise handelt es sich hierbei um Feldhäcksler mit einem Erntevorsatzgerät zur Ernte von stängelartigen Erntegut, wie Mais oder dergleichen.
Leistungsfähigkeit und Schnelligkeit sind Forderungen, die es immer weiter zu verbessern gilt. Immer größere Arbeitsbreiten der Vorsatzgeräte, die durch immer größere Motorleistungen der Erntemaschinen ermöglicht werden und so die Leistungsfähigkeit der Erntemaschine steigern, erfordern jedoch immer aufwändigere Lösungen bezüglich Handhabung und Transport.
Um bei Transportfahrten von Erntemaschinen mit Erntegeräten großer Arbeitsbreite einen besonders zeitaufwändigen Abbau des Erntegerätes und ein Mitführen auf einem gesonderten Transportwagen zu vermeiden, sind bereits verschiedene Ausführungsformen von Erntegeräten bekannt, die in der Transportstellung eine Breitenreduzierung ermöglichen. Um die gesetzlichen Vorschriften für die Straßenfahrt einer Erntemaschine einzuhalten, ist jedoch nicht nur eine maximale Breite von beispielsweise 3 Meter einzuhalten, sondern ebenso eine höchstzulässige Transporthöhe und eine maximal zulässige Einschränkung des Sichtfeldes des Fahrers, sowie eine maximale Achslast. Weiterhin gehören eine möglichst gleichmäßige Gewichtsverteilung und ein möglichst tief liegender Schwerpunkt zu den wichtigen Kriterien für ein stabiles und komfortables Fahrverhalten und damit für die Verkehrssicherheit.
Dem entgegen stehen jedoch immer größere Gewichte der Vorsatzgeräte bei zunehmender Arbeitsbreite. Besondere Ausführungsformen von Erntegeräten, welche mit einer Mehrzahl von rotierend angetriebenen Trommeln als Schneid- und Aufnahmeelementen arbeiten und in der Regel auf zusätzliche Förderelemente zur Erntegutförderung angewiesen sind, werden bei zunehmender Arbeitsbreite extrem aufwändig und schwer und damit auch sehr teuer, sowohl in der Herstellung als auch im späteren Unterhalt bezüglich Wartung und Ersatzteile.
Als ein Beispiel dazu sei die EP 1 008 291 A1 erwähnt, dessen Abbildungen die zuvor genannten Nachteile einer derartigen Ausführungsform sehr gut veranschaulichen. Auch ist in den Fig. 2, 3 und 5 der EP 1 008 291 gut zu erkennen, das der Abstand von der Vorderseite ( Schneid- und
Aufnahmeebene ) des Erntegerätes bis zum Einzugsbereich der Erntemaschine durch die Emtegutförderung in einer Ebene hinter den Aufnahmetrommeln sehr groß ist, was eine ausgeglichene Gewichtsverteilung der Erntemaschine äußerst ungünstig beeinflusst und die Vorderachse extrem belastet.

In der DE 199 33 779 A1 des Anmelders ist beispielsweise eine Erntemaschine mit einem mittig geteiltem Erntegerät offenbart, bei dem die beiden Hälften aus einer zum Erdboden parallelen Arbeitsstellung in eine senkrechte Transportstellung verschwenkt werden können. Durch die vorteilhafte Verwendung jeweils nur einer Schneid- und Fördereinrichtung in der Art eines um zumindest zwei annähernd vertikalen Achsen umlaufenden Endlosförderers je Erntegeräthälfte, welcher das Erntegut abtrennt, aufnimmt und weiterfördert, ist mit einfachen Mitteln ein Erntegerät geschaffen worden, welches unter Beachtung der vorhergehend genannten gesetzlichen Bestimmungen eine große Arbeitsbreite bei geringem Gewicht und konstruktiven Aufwand bietet. Durch die Vermeidung einer zusätzlichen Förderebene ist diese Ausführungsform extrem kurz und flach bauend, was einer Verbesserung der Gewichtsverteilung und der Schwerpunktlage der Erntemaschine sehr zu Gute kommt.
Der Forderung nach noch größeren Arbeitsbreiten ist bei dieser Ausführungsform jedoch durch die gesetzlich zulässige Transporthöhe eine Grenze gesetzt, des weiteren ist die Sichtbehinderung durch die in der Transportstellung senkrecht gestellten Erntegeräthälften durch die geschickte Anordnung der Schwenkachsen zwar auf ein Minimum reduziert, aber nicht ganz zu vermeiden.

Der Erfindung liegt daher die Aufgabe zugrunde, eine gattungsgemäße selbstfahrende landwirtschaftliche Erntemaschine mit einem Erntegerät bereitzustellen, welches durch seine besonders vorteilhafte Gestaltung und leichte Ausführungsform in seiner Transportstellung die Transportfahrt der Erntemaschine nicht mehr negativ beeinflusst und dabei eine vergrößerte Arbeitsbreite von zumindest annähernd der dreifachen Transportbreite aufweist.
Erfindungsgemäß wird diese Aufgabe durch die im Patentanspruch 1 genannten kennzeichnenden Merkmale gelöst.
Wie bereits zuvor beschrieben, weist die Ausführungsform des Erntevorsatzgerätes der in der DE 199 33 779 A1 offenbarten Erntemaschine diverse Vorteile gegenüber anderen bekannten Ausführungsformen auf.
Nach der Erfindung wird nun vorgeschlagen ein Erntegerät der vorteilhaften Ausführungsform mit einem umlaufenden Mäh- und Förderkollektor derart mehrteilig auszubilden, dass es bei wesentlich vergrößerter Arbeitsbreite in eine Transportbreite verbringbar ist, die den gesetzlichen Bestimmungen von beispielsweise maximal 3 Metern entspricht. Die Einhaltung weiterer Vorschriften bezüglich maximaler Transporthöhe und Fahrersichtfeld werden von der vorgeschlagenen Lösung nicht nur voll erfüllt. Vielmehr bietet sie gegenüber dem Stand der Technik eine wesentliche Verbesserung für den Fahrer, weil das Erntegerät der erfindungsgemäßen Erntemaschine auch in der Transportstellung unterhalb des normalen Sichtfeldes des Fahrers bleibt und so die Übersicht und damit auch den Fahrkomfort und insbesondere die Verkehrssicherheit erheblich erhöht.
Ein Erntegerät mit nur einer Mäh- und Fördereinrichtung in Kollektorausführung je Vorsatzhälfte benötigt gegenüber Ausführungen mit mehreren Mäh- und Fördertrommeln und eventuell noch zusätzlichen Förder- oder Leittrommeln nur einen Antrieb pro Erntegerätseite, unabhängig von der Arbeitsbreite. Bei einer Vergrößerung der Arbeitsbreite verändert sich nur die Kollektorlänge im Trummbereich.
Diese Merkmale einer Kollektorausführung eines Erntegerätes und zusätzlich die Tatsache, dass das Erntegut ausschließlich an der Kollektorvorderseite über die gesamte Arbeitsbreite transportiert wird und somit keine zusätzliche Förderebene und keine zusätzlichen Fördereinrichtungen notwendig sind, bringen dieser Ausführungsform große Vorteile bezüglich konstruktivem Aufbau, Gewicht, Baugröße und damit Gewichtsverteilung und nicht zuletzt in den Herstellungskosten.
Durch die mehr als zweiteilige Ausbildung eines Erntegerätes mit Mäh- und Förderkollektor wurde es nun notwendig, Trennstellen einzubauen, wobei aber weiterhin die vorteilhaften Merkmale dieser Ausführungsform genutzt werden sollen.
Erfindungsgemäß ist das durch die Anordnung von mindestens zwei Mäh- und Fördermitteln in
Kollektorausführung je Erntegerätseite gelöst worden, so das zwischen den Mäh- und Fördermitteln eine Trennstelle des Erntegerätes für ein Klappen oder Schwenken in eine Transportstellung ermöglicht wird.
Für eine auch weiterhin ausschließlich an der in Arbeitsrichtung weisenden Vorderseite stattfindenden Erntegutförderung haben die Mäh- und Fördermittel einer Erntegeräteseite eine gleichsinnige Umlaufrichtung, die das Erntegut erst quer von außen nach innen und dann kurz nach hinten zum Einzugsbereich der Erntemaschine fördert.
Der Mehraufwand der mehrteiligen Lösung, der z. B. durch zusätzliche Antriebe entsteht, wird andererseits wieder dadurch ausgeglichen, dass die Mäh- und Fördermittel auf Grund der kürzeren Ausführung schwächer und leichter gestaltet werden können, was wiederum kleinere Umlenkräder und damit noch weniger Platzbedarf bedeutet. Insbesondere an den Trennstellen des Erntegerätes, an denen das Erntegut von einem äußeren an einem weiter innen zur Erntegerätmitte hin angeordnetem Mäh- und Fördermittel frontseitig übergeben werden muss, kommt eine möglichst enge Umlenkung der Mäh- und Fördermittel der Erntegutübergabe sehr vorteilhaft zugute.
Durch eine leicht nach vorne geneigte Ausrichtung der Mäh- und Fördermittel ist der vorne quer nach innen laufende, Erntegut abtrennende und aufnehmende Trumm des Kollektors eines Mäh- und Fördermittels dem Erdboden näher beabstandet als der hintere, leer nach außen laufende Trumm. Durch die gleichzeitig in Fahrt- und Arbeitsrichtung versetzte Anordnung der Mäh- und
Fördermittel wird ermöglicht, das die Schneid- und Halteelemente zweier nebeneinander angeordneter Mäh- und Fördermittel im Bereich einer Trennstelle des Erntegerätes, in dem eine Erntegutübergabe erfolgt, ineinander greifen ohne zu kollidieren.
Die Umlaufbahnen der Schneid- und Halteelemente überschneiden sich derart, dass das Erntegut von einem weiter außen und in Arbeitsrichtung weiter vorne liegenden Mäh- und Fördermittel von einem diesem nach innen zur Erntegerätmitte hin benachbarten und in Arbeitsrichtung weiter hinten zur Erntemaschine hin angeordneten Mäh- und Fördermittel übernommen wird, ohne dabei eine merkliche Richtungsänderung zu erfahren. Das Erntegut wird nahezu linear quer zur Fahrt- und Arbeitsrichtung an der Vorderseite des Erntegerätes von außen nach innen dem Einzugsbereich der Erntemaschine zugeführt. Erst hier wird es umgelenkt und einen kurzen Weg entgegen der Arbeitsrichtung aber immer noch durch die inneren Mäh- und Fördermittel dem Einzug der Erntemaschine zugeführt.
Besonders die konsequente Linearförderung des Erntegutes über die gesamte Arbeitsbreite ermöglicht unter anderem auch eine besonders hohe Fördergeschwindigkeit ohne Erntegutverluste wie sie durch Zentrifugalkräfte bei Fördertrommeln nachteilig schnell auftreten.
Durch die Teilung der Mäh- und Fördermittel einer Erntegeräthälfte in zumindest zwei Mäh- und
Fördermittel wird des weiteren vorteilhaft eine Anpassung der Mäh- und Fördermittel an die von außen nach innen zunehmende Erntegutmenge, beispielsweise bezüglich Fördergeschwindigkeit oder Größe und/oder Form der Schneid- und Halteelemente ermöglicht.
Bei einer besonders vorteilhaften Ausgestaltung des Erntegerätes einer Erntemaschine nach der Erfindung ist die Arbeitsbreite des mittleren Erntegerätteiles bei in Außerbetriebstellung befindlichen Seitenteilen derart auf einen normierten Reihenabstand des Erntegutes abgestimmt, dass eine sichere Ernte einer Anzahl von Reihen gewährleistet ist, so das weitere Erntegutreihen weder durch Teile des Erntegerätes noch durch die Erntemaschine selbst beschädigt bzw. niedergefahren werden.
Somit ist durch die besonders vorteilhaften Merkmale der Erfindung eine Erntemaschine geschaffen, welche ein sehr flexibel einsetzbares Erntegerät mit einer vergrößerten Arbeitsbreite umfasst, das in der Transportstellung keine Sichtbeeinträchtigung des Fahrers darstellt und die Verkehrssicherheit bei der Transportfahrt wesentlich erhöht.

Weitere Merkmale und Vorteile der Erfindung ergeben sich aus den Ansprüchen und der nachstehenden Beschreibung in Verbindung mit der Zeichnung, in der ein Ausführungsbeispiel des Gegenstands der Erfindung veranschaulicht ist.
In der Zeichnung zeigt:
**Fig. 1** eine perspektivische Darstellung einer erfindungsgemäßen selbstfahrenden landwirtschaftlichen Erntemaschine mit einem in drei Teile aufgeteilten Erntegerät zum Ernten von Mais oder dergl. stängelartigem Erntegut in einer Arbeits- und Betriebsstellung;
**Fig. 2** eine perspektivische Darstellung der Erntemaschine nach Fig. 1 mit in Transportstellung überführten Teilen des Erntegerätes;
**Fig. 3** eine Detaildarstellung des Bereiches X der Fig. 1.

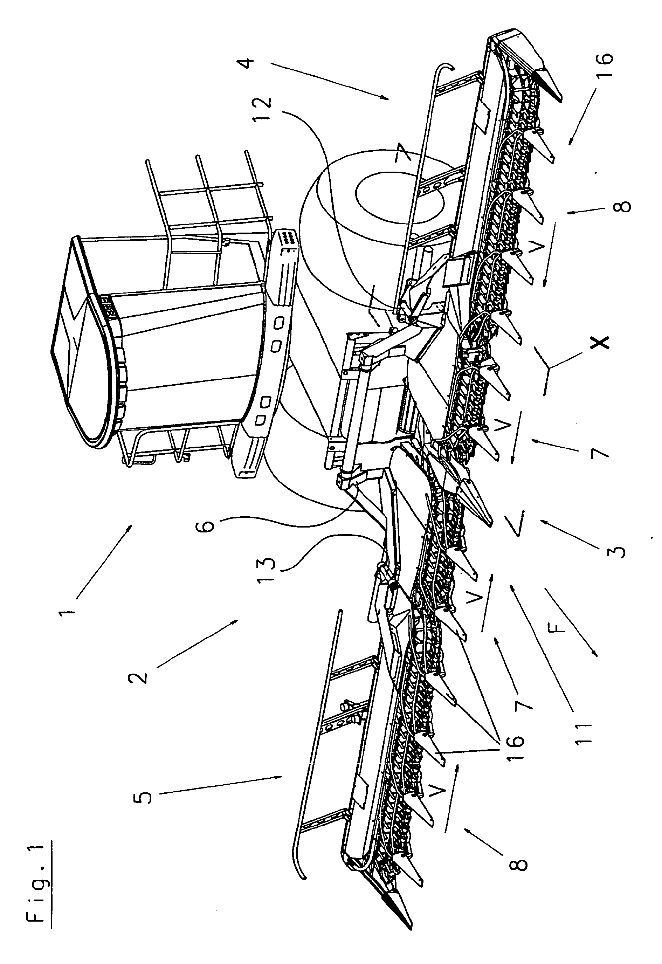

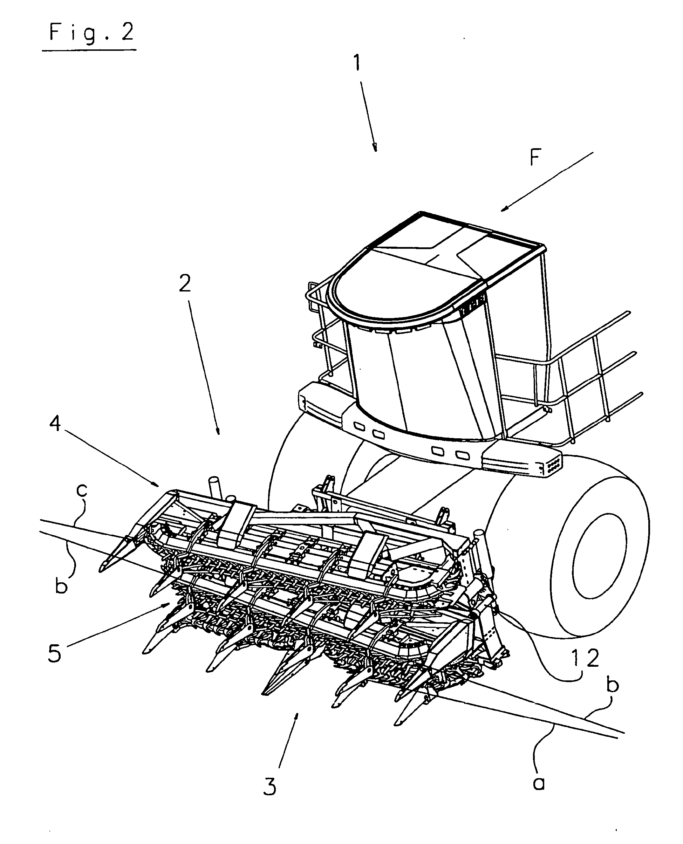

Ein Beispiel einer selbstfahrenden landwirtschaftlichen Erntemaschine 1 in der Ausführungsform eines Feldhäckslers mit einem Erntegerät 2, das insbesondere als Vorsatzgerät zum reihenunabhängigen Ernten von stängelartigem Erntegut wie Mais oder dergleichen eingesetzt wird, ist in Fig. 1 näher veranschaulicht und besteht vorzugsweise, wie hier dargestellt, aus drei Teilen 3, 4, 5. Einem über einen Grundrahmen 6 fest mit der Erntemaschine verbundenen Mittelteil 3 sind dabei zwei randseitig an diesem über je eine Schwenkachse 12, 13 angelenkte Seitenteile 4, 5 zugeordnet. In der in Fig. 1 dargestellten Arbeitsstellung des Erntegerätes 2 sind die Seitenteile 4, 5 in nicht näher beschriebener Weise seitlich am Mittelteil 3 abgestützt und erforderlichenfalls verriegelt.
Das Mittelteil 3 sowie die Seitenteile 4, 5 umfassen jeweils Mäh- und Fördermittel 7, 8, welche umlaufend angetrieben das Erntegut mit nach außen weisenden Schneid- und Halteelementen 9, 10 abtrennen, aufnehmen und weiterfördern.
Der Antrieb der Mäh- und Fördermittel 7, 8 erfolgt in nicht dargestellter Weise über Antriebsstränge von einer Kraftquelle der angeschlossenen Erntemaschine 1 aus. Beim Verschwenken der Seitenteile 4, 5 in eine Außerbetriebsstellung werden die Antriebsstränge der Seitenteile 4, 5 getrennt und umgekehrt beim Verschwenken der Seitenteile 4, 5 in ihre Arbeits- und Betriebsstellung automatisch wieder verbunden.
Im gezeigten Beispiel ist das Erntegerät 2 genau mittig zur Erntemaschine 1 vorgebaut, so dass es sich symmetrisch zu einer vertikalen Längsmittelebene der Erntemaschine 1 zu beiden Seiten hin erstreckt. Um das von den Seitenteilen 4, 5 zugeführte Erntegut dem Einzugsbereich 11 der Erntemaschine 1 gleichzeitig und gleichmäßig zuführen zu können, ist das Mittelteil des Erntegerätes 2 mit zwei Mäh- und Fördermittel 7 ausgestattet, welche gegensinnig in Pfeilrichtung V umlaufend angetrieben das Erntegut der Erntemaschine 1 zuführen.
Die Seitenteile 4, 5 des Erntegerätes 2 der erfindungsgemäßen Erntemaschine 1 des Ausführungsbeispiels sind vorteilhaft jeweils mit nur einem Mäh- und Fördermittel 8 ausgestattet, welches in Pfeilrichtung V umlaufend angetrieben während der Arbeitsfahrt der Erntemaschine das gesamte von ihm erfassbare Erntegut ausschließlich an seiner in Fahrtrichtung F weisenden Vorderseite abtrennt, aufnimmt und weiterfördert. Die Vorteile einer Ausführung der Seitenteile 4, 5 mit nur einem Mäh- und Fördermittel 8 sind das besonders geringe Gewicht, die sehr kompakte Baugröße und damit auch die günstige Schwerpunktlage und die antriebstechnisch einfache Ausführung. Besonders bei immer größeren Arbeitsbreiten der Erntegeräte sind das wichtige Kriterien, die den Herstellungspreis, die Handhabung und die Transportmöglichkeiten des Erntegerätes entscheidend beeinflussen.
Die sehr kurz bauende Ausführung eines Erntegerätes 2 des Beispiels bringt bereits in der in Fig. 1 gezeigten Arbeitsstellung Vorteile bezüglich kurzer Förderwege des Ernteguts zum Einzugsbereich 11 der Erntemaschine 1 und günstiger Achslastverteilung der Erntemaschine. Die in der Fig. 2 dargestellte Transportstellung des Erntegerätes macht jedoch noch weitere sehr vorteilhafte Merkmale deutlich.
Aus einer Arbeitsstellung des Erntegerätes 2 gemäß Fig. 1, in der sich alle Teile 3, 4, 5 mit den ihnen zugeordneten Mäh- und Fördermitteln 7, 8 in einer zumindest annähernd gemeinsamen Ebene parallel zum Erdboden befinden, wird durch Verschwenken der Seitenteile 4, 5 um die Schwenkachsen 12, 13 mit Hilfe nicht näher beschriebener hydraulischer Arbeitszylinder die Transportstellung des Erntegerätes 2 gemäß Fig. 2 erreicht.
Die Schwenkachsen 12, 13 ermöglichen dabei durch ihre besondere unterschiedliche Ausrichtung, welche zu einer vertikalen Längsmittelebene der Erntemaschine 1 in unterschiedlich spitzen Winkeln und zusätzlich in unterschiedlichen Höhen liegt, eine sehr kompakte, optimierte Transportposition der Erntegerätteile 3, 4, 5 zueinander. Für die Verlagerung der Seitenteile 4, 5 in die Transportstellung gemäß Fig. 2 wird zunächst das Seitenteil 5 um die tiefer liegende Schwenkachse 13 um 180 Grad verschwenkt, so dass es dann mit der Unterseite nach oben zeigend auf das Mittelteil 3 abgelegt ist. Hierbei bewirkt die schräge Ausrichtung der Schwenkachse, dass das Seitenteil 5 möglichst dicht zum Mittelteil 3 beabstandet auf diesem abgelegt werden kann, ohne dabei mit anderen Bauteilen des Erntegerätes 2 zu kollidieren. Jetzt erfolgt für das zweite Seitenteil 4 ebenfalls die Verschwenkung um 180 Grad, jedoch um die wesentlich höher, aber aus gleichen Gründen auch schräg angeordnete Schwenkachse 12, wobei die hohe Anordnung der Schwenkachse 12 bewirkt, dass sich das Seitenteil 4 mit seiner Unterseite nach oben zeigend auf das bereits verschwenkte Seitenteil 5 in Transportstellung ablegt. Die aus den bereits genannten Gründen vorteilhafte leicht versetzte Ausrichtung der Erntegerätteile 3, 4, 5 in der Transportstellung zueinander wird in Fig. 2 durch die Linien a, b und c ersichtlich, welche jeweils als Verlängerungen der Vorderlinien der Erntegerätteile 3, 4, 5 nur zur Verdeutlichung dienen.

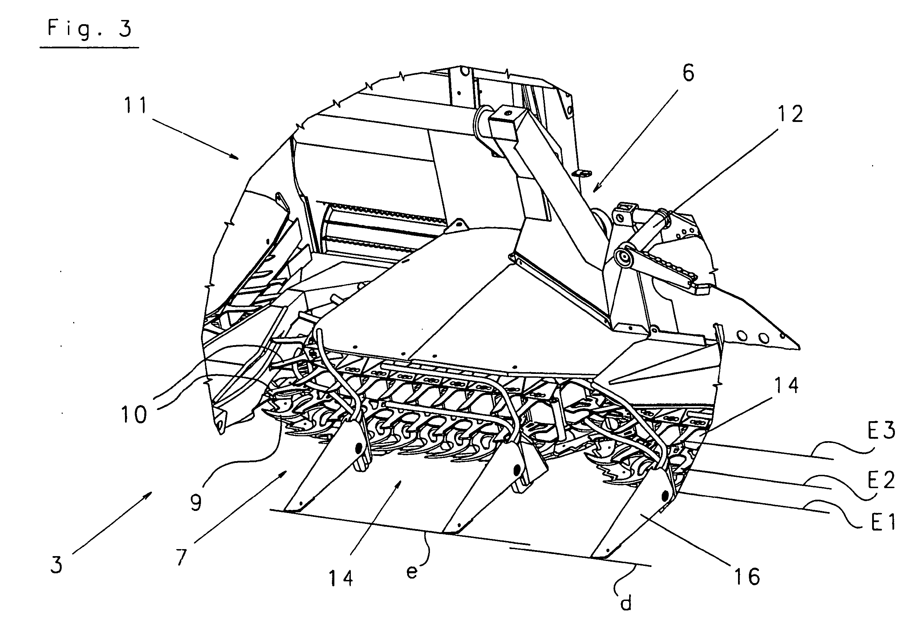

Die vorteilhafte Transportstellung des Erntegerätes 2 der erfindungsgemäßen Erntemaschine wird am in Fig. 2 dargestellten Ausführungsbeispiel besonders deutlich.
Das Erntegerät 2 mit einer Arbeitsbreite von nahezu der dreifachen Erntemaschinenbreite bildet in seiner Transportstellung eine derart kompakte Einheit, dass sie bei ihrem Verbleib vor der Erntemaschine 1 bei der Transportfahrt durch ihr geringes Gewicht und dem günstigen tief und dicht zur Erntemaschine liegenden Schwerpunkt die Fahreigenschaften nicht negativ beeinflusst und des weiteren das Sichtfeld des Fahrers nicht einschränkt und damit eine wesentliche Verbesserung der Verkehrssicherheit mit sich bringt.
Sollte ein Erntegerät 2 der beschriebenen Ausführungsform beispielsweise auf Grund seiner noch weiter gesteigerten Arbeitsbreite in der Transportstellung in seiner Querausrichtung für den Straßenverkehr zu breit sein und deshalb auf einem Transportwagen mitgeführt werden, so bietet die Ausführungsform auch dabei große Vorteile durch seine kompakten Abmessungen und niedrige Schwerpunktlage.
Die Erntemaschine 1 nach der Erfindung kann durch die vorteilhafte Gestaltung seines Erntegerätes 2 außer in den in Fig. 1 und Fig. 2 gezeigten Betriebsarten noch in weiteren vorteilhaften Betriebsarten betrieben werden.
So ist es beispielsweise möglich, ein oder beide Seitenteile 4, 5 des Erntegerätes 2 nur um etwa 90 Grad in eine zum Erdboden annähernd senkrechte Stellung zu verschwenken, um dann entweder mit kleinster Arbeitsbreite nur mit dem Mittelteil 3 oder aber mit einer mittleren Arbeitsbreite mit dem Mittelteil 3 und einem Seitenteil 4, 5 zu ernten. Da die Antriebsstränge der Seitenteile 4, 5 bei ihrem Verschwenken getrennt werden, sind die Mäh- und Fördermittel 8 in dieser zuvor beschriebenen zusätzlichen Außerbetriebsstellung stillgesetzt. Diese zusätzlichen Betriebsarten können unter anderem sehr vorteilhaft sein, wenn außerhalb des abzuerntenden Feldes nicht ausreichend Platz zur Verfügung steht, um das Erntegerät komplett in seine Arbeitsstellung gemäß Fig. 1 zu bringen. In einem solchen Fall kann mit verringerter Arbeitsbreite ein entsprechender Bereich des Feldes abgeerntet werden, ohne dabei Verluste durch Überfahren oder Abknicken des Erntegutes zu verursachen.
Die bisher im Vorhergehendem beschriebenen vorteilhaften Merkmale des Erntegerätes 2 der erfindungsgemäßen Erntemaschine 1 des Beispiels beruhen fast ausschließlich auf dem Grundprinzip der Mäh- und Fördermittel 7, 8 und deren erfindungsgemäße Ausgestaltung und Verwendung.
So umfassen die Mäh- und Fördermittel 7, 8 in erster Linie, wie insbesondere in der Detailansicht der Fig. 3 erkennbar, gelenkig miteinander verbundene Teilsegmente 14 mit an diesen angeordneten nach außen weisenden Schneid- und Halteelementen 9, 10, welche in übereinander angeordneten Ebenen E1, E2, E3 liegen. Jedes Teilsegment 14 weist dabei in der unteren Ebene E1 je ein Schneidelement 9, in der mittleren Ebene E2 je ein Halteelement 10 und in der oberen Ebene E3 ebenfalls nur ein weiteres Halteelement 10 auf. Die gelenkig miteinander verbundenen Teilsegmente 14 der Mäh- und Fördermittel 7, 8 werden um mindestens zwei nicht dargestellte Antriebs- und Umlenkräder derart umlaufend angetrieben, dass sie das Erntegut mit ihrem in Fahrt- und Arbeitsrichtung F vorne verlaufendem Trumm abtrennen, aufnehmen und in der Art eines Endlosförderers linear in Pfeilrichtung V zur Mitte des Erntegerätes 2 fördern. Ein kritischer Punkt der Förderung ist dabei die störungs- und verlustfreie Übergabe des Erntegutes an den Schnittstellen zwischen Mittelteil 3 und Seitenteilen 4, 5. In diesen Bereichen muss das gesamte bis dahin von dem Mäh- und Fördermittel 8 aufgenommene und geförderte Erntegut an das innen liegende Mäh- und Fördermittel 7 der jeweiligen Erntegerätseite übergeben und von diesem aufgenommen werden, bei gleichzeitigem Abtrennen und Aufnehmen weiteren Ernteguts.
Ermöglicht wird diese Übergabe in erster Linie durch eine besondere Anordnung der jeweiligen benachbarten Mäh- und Fördermittel 7, 8 einer Erntegeräthälfte. Der Abstand der Linien d und e in Fig. 3, welche Parallelen zu den Erntegerätteilen 3, 4 darstellen, zeigt deutlich die versetzte Anordnung der Seitenteile 4, 5 zum Mittelteil 3. Durch die gleichzeitige, nach vorne gleich geneigte Stellung der Erntegerätteile 3, 4, 5 in der Art, dass die untere Schneidebene E1 der Mäh- und Fördermittel 7, 8 im gleichen Abstand zum Erdboden beabstandet sind und somit das Erntegut auf der gesamten Arbeitsbreite auf gleicher Höhe abschneiden, wird ein Überschneiden der Umlaufebenen E1, E2, E3 der Schneid- und Halteelemente 9, 10 kollisionsfrei ermöglicht. Diese Merkmale und die vorteilhafte Verwendung möglichst kleiner Teilsegmente 14, die wiederum Umlenkungen mit kleinen Radien der Mäh- und Fördermittel 7, 8 besonders in den Übergabebereichen ermöglichen, bewirken ein schnelles Öffnen und Schließen der Aufnahmeräume 15 zwischen den Halteelementen 10 der Mäh- und Fördermittel, was bei gleichzeitiger Überschneidung der Umlaufebenen und gleichen Drehsinn eine störungsfreie Übergabe des Erntegutes zur Folge hat.
Unterstützend sind den Mäh- und Fördermitteln 7, 8 für eine in allen Bereichen optimierte Erntegutführung Stängelteiler 16 mit an diesen angeordneten Führungsbügeln zugeordnet. Durch die Kombination der beschriebenen Merkmale des Ausführungsbeispiels wird ein ausschließlich an der Vorderseite des Erntegerätes stattfindender Ernteguttransport, auch über Schnittstellen des Erntegerätes 2 hinweg mit dort notwendiger Übergabe von einem Mäh- und
Fördermittel 8 eines Seitenteiles 4, 5 zu einem Mäh- und Fördermittel 7 des Mittelteiles 3 bei gleichzeitiger Ernte und Aufnahme weiteren Erntegutes möglich. Weitere Ausführungsformen mit beispielsweise mehr als einem klappbaren Seitenteil je Erntegeräthälfte sind dabei auch denkbar.

## Patentansprüche

1. Selbstfahrende landwirtschaftliche Erntemaschine (1) mit einem vorzugsweise in einem Bereich vor einem Fahrerstand angeordneten, aus zumindest zwei Teilen gebildeten und in seiner längsten Ausrichtung quer zur Fahrt- und Arbeitsrichtung (F) ausgerichteten Erntegerät (2) in der Art einer Mäh- und Fördereinrichtung oder dergleichen mit um im wesentlichen vertikalen Achsen umlaufend angetriebenen Mäh- und Fördermitteln (7, 8), die in Fahrt- und Arbeitsrichtung (F) zumindest zweifach nebeneinander je Erntegerätseite angeordnet das Erntegut abtrennen, aufnehmen und als Endlosförderer weiterfördern, **dadurch gekennzeichnet, dass** das Erntegut ausschließlich in einem, dem stehendem Erntegut zugewandten Bereich der Mäh- und Fördermittel (7, 8) einem Einzugsbereich (11) der Erntemaschine (1) zugeführt wird, wobei die Mäh- und Fördermittel (7, 8) einer Erntegerätseite gleichsinnig angetrieben sind.

2. Selbstfahrende landwirtschaftliche Erntemaschine (1) nach Anspruch 1, **dadurch gekennzeichnet, dass** die Mäh- und Fördermittel (7, 8) mit nach außen weisenden Schneid- und Halteelementen (9, 10) versehen sind, welche in mindestens zwei übereinanderliegenden Ebenen (E1, E2, E3) angeordnet sind.

3. Selbstfahrende landwirtschaftliche Erntemaschine (1) nach Anspruch 1 oder 2, **dadurch gekennzeichnet, dass** die Mäh- und Fördermittel (7, 8) das Erntegut an der in Fahrt- und Arbeitsrichtung (F) weisenden Vorderseite des Erntegerätes (2) abtrennen, aufnehmen und im wesentlichen quer zur Fahrt- und Arbeitsrichtung (F) linear in Richtung Emtegerätmitte fördern.

4. Selbstfahrende landwirtschaftliche Erntemaschine (1) nach einem der vorhergehenden Ansprüche, **dadurch gekennzeichnet, dass** die inneren, zur Emtegerätmitte hin angeordneten Mäh- und Fördermittel (7) das gesamte von den nach außen hin vorgeordneten Mäh- und Fördermitteln (8) geerntete Erntegut an der in Fahrt- und Arbeitsrichtung (F) weisenden Vorderseite übernehmen und weiterfördern und zusätzlich in ihrem Erfassungsbereich stehendes Erntegut abtrennen, aufnehmen und ebenfalls weiterfördern.

5. Selbstfahrende landwirtschaftliche Erntemaschine (1) nach einem der vorhergehenden Ansprüche, **dadurch gekennzeichnet, dass** die Umlaufebenen (E1, E2, E3) der Mäh- und Fördermittel (7, 8) in Fahrt- und Arbeitsrichtung (F) geneigt sind.

6. Selbstfahrende landwirtschaftliche Erntemaschine (1) nach einem der vorhergehenden Ansprüche 2-5, **dadurch gekennzeichnet, dass** sich die Hüllbahnen der Schneid- und Halteelemente (9, 10) nebeneinander angeordneter Mäh- und Fördermittel (7, 8) einer Erntegerätseite in einem Teilbereich überschneiden.

7. Selbstfahrende landwirtschaftliche Erntemaschine (1) nach einem der vorhergehenden Ansprüche, **dadurch gekennzeichnet, dass** die quer zur Fahrt- und Arbeitsrichtung (F) nebeneinander angeordneten Mäh- und Fördermittel (7, 8) des Erntegerätes (2) mit ihrer Vorderseite in Fahrt- und Arbeitsrichtung (F) derart versetzt zueinander angeordnet sind, dass der Abstand der Vorderseite der inneren Mäh- und Fördermittel (7) des Erntegerätes (2) zur Erntemaschine (1) am geringsten ist.

8. Selbstfahrende landwirtschaftliche Erntemaschine (1) nach einem der vorhergehenden Ansprüche, **dadurch gekennzeichnet, dass** die Mäh- und Fördermittel (7, 8) des Erntegerätes (2) um mindestens zwei Antriebs- und Umlenkräder geführte Endlosförderer sind.

9. Selbstfahrende landwirtschaftliche Erntemaschine (1) nach einem der vorhergehenden Ansprüche, **dadurch gekennzeichnet, dass** die umlaufend angetriebenen Mäh- und Fördermittel (7, 8) des Erntegerätes (2) gelenkig miteinander verbundene Teilsegmente (14) umfassen, welche in mindestens zwei Ebenen (E1, E2, E3) übereinander angeordnet pro Ebene (E1, E2, E3) ein Schneid- oder Halteelement (9, 10) aufweisen.

10. Selbstfahrende landwirtschaftliche Erntemaschine (1) nach einem der vorhergehenden Ansprüche, **dadurch gekennzeichnet, dass** das zumindest zweiteilige Erntegerät (2) aus einer sich quer zur Fahrt- und Arbeitsrichtung (F) erstreckenden Betriebsstellung in eine Transportstellung überführbar ist, wodurch die Erntemaschine (1) die für die Straßenfahrt gesetzlich zulässigen Abmessungen nicht überschreitet.

11. Selbstfahrende landwirtschaftliche Erntemaschine (1) nach einem der vorhergehenden Ansprüche, **dadurch gekennzeichnet, dass** das sie umfassende Erntegerät (2) vorzugsweise zum Ernten von Mais oder dergleichen stängelartigem Erntegut bestimmt ist.

## Claims

1. Self-propelled agricultural harvester (1) having a harvesting unit (2) which is preferably arranged in a region ahead of a driver's station, which is preferably formed in at least two parts, whose longest dimension is preferably aligned transversely to the direction of travel and working (F) and which is of the mowing and feeding arrangement type or the like having mowing and feeding means (7, 8) which are driven in circulation about substantially vertical axes and which, being arranged next to one another in at least two sets on each side of the harvester, cut the harvested crop, pick it up, and feed it onwards as continuous feeders, **characterised in that** the harvested crop is fed to an intake region (11) of the harvester (1) only in a region of the mowing and feeding means (7, 8) which faces the standing crop, the mowing and feeding means (7, 8) on a side of the harvesting unit being driven in the same direction.

2. Self-propelled agricultural harvester (1) according to claim 1, **characterised in that** the mowing and feedings means (7, 8) are provided with outward pointing cutting and holding members (9, 10) which are arranged in at least two planes (E1, E2, E3) situated one above the other.

3. Self-propelled agricultural harvester (1) according to claim 1 or 2, **characterised in that** it is at the front side, which faces in the direction of travel and working (F), of the harvesting unit (2) that the mowing and feeding means (7, 8) cut the harvested crop, pick it up and feed it in a straight line, substantially transversely to the direction of travel and working (F), towards the centre of the harvesting unit.

4. Self-propelled agricultural harvester (1) according to one of the foregoing claims, **characterised in that**, at the front side which faces in the direction of travel and working (F), the inner mowing and feeding means (7) which are arranged towards the centre of the harvesting unit take over and feed onwards the whole of the crop which is harvested by the mowing and feeding means (8) which are arranged upstream of them towards the outside, and at the said front side which faces in the direction of travel and working (F) they in addition cut, pick up and likewise feed onwards standing crop in the region covered by them.

5. Self-propelled agricultural harvester (1) according to one of the foregoing claims, **characterised in that** the planes of circulation (E1, E2, E3) of the mowing and feeding means (7, 8) are inclined in the direction of travel and working (F).

6. Self-propelled agricultural harvester (1) according to one of foregoing claims 2 to 5, **characterised in that** the envelopes of the paths followed by the cutting and holding members (9, 10) of the mowing and feeding means (7, 8) which are arranged next to one another on a side of the harvesting unit overlap in a part of the regions occupied by them.

7. Self-propelled agricultural harvester (1) according to one of the foregoing claims, **characterised in that** the front sides of the harvesting unit's (2) mowing and feeding means (7, 8) which are arranged next to one another transversely to the direction of travel and working (F) are arranged to be offset from one another in the direction of travel and working (F), in such a way that it is the front side of the inner mowing and feeding means (7) of the harvesting unit (2) which is the shortest distance away from the harvester (1).

8. Self-propelled agricultural harvester (1) according to one of the foregoing claims, **characterised in that** the mowing and feeding means (7, 8) of the harvesting unit (2) are continuous feeders which pass around at least two driving and return wheels.

9. Self-propelled agricultural harvester (1) according to one of the foregoing claims, **characterised in that** the mowing and feeding means (7, 8) of the harvesting unit (2) which are driven in circulation comprises sub-segments (14) which are connected together to hinge and which have one cutting or holding element (9, 10) per plane (E1, E2, E3) arranged one above the other on at least two planes (E1, E2, E3).

10. Self-propelled agricultural harvester (1) according to one of the foregoing claims, **characterised in that** the harvesting unit (2) which is in at least two parts can be transferred from an operating position in which it extends transversely to the direction of travel and working (F) to a position for transport, as a result of which the harvester (1) does not exceed the dimensions permitted by law for travel on the road.

11. Self-propelled agricultural harvester (1) according to one of the foregoing claims, **characterised in that** the harvesting unit (2) which it comprises is preferably intended for harvesting maize or the like stalked crops for harvesting.

## Revendications

1. Récolteuse agricole automotrice (1) comportant un appareil de récolte (2) installé de préférence dans la région en avant du poste de conduite et formé d'au moins deux parties et dont la direction de la plus grande longueur s'étend transversalement à la direction de déplacement et de travail (F), cet appareil de récolte étant en forme d'installation de coupe et de transfert ou analogue, comportant des moyens de coupe et de transfert (7, 8) entraînés, tournant pratiquement autour d'axes verticaux, ces moyens coupant au moins deux fois successivement par côté d'appareil, les produits de récolte dans la direction de déplacement et de travail (F), recevant les produits et les transférant comme un convoyeur sans fin,
**caractérisée en ce que**,
les produits de récolte sont fournis à une zone d'entrée (11) de la récolteuse (1) exclusivement dans une zone des moyens de coupe et de transfert (7, 8) tournés vers les produits de récolte sur pied,
les moyens de coupe et de transfert (7, 8) d'un côté de l'appareil de récolte étant entraînés dans le même sens.

2. Récolteuse agricole automotrice (1) selon la revendication 1,
**caractérisée en ce que**
les moyens de coupe et de transfert (7, 8) sont munis d'éléments de coupe et de retenue (9, 10) tournés vers l'extérieur, et installés dans au moins deux plans superposés (E1, E2, E3).

3. Récolteuse agricole automotrice (1) selon la revendication 1 ou 2,
**caractérisée en ce que**
les moyens de coupe et de transfert (7, 8) coupent les produits de récolte dans le côté avant de l'appareil de récolte (2), tournés dans la direction de déplacement et de travail (F), recevant les produits et les transférant pratiquement transversalement à la direction de déplacement et de travail (F), de façon linéaire en direction du milieu de l'appareil de récolte.

4. Récolteuse agricole automotrice (1) selon l'une quelconque des revendications précédentes,
**caractérisée en ce que**
les moyens de coupe et de transfert (7) intérieurs, du côté du milieu de l'appareil de récolte reçoivent l'ensemble des produits de récolte fournis par les moyens de coupe et de transfert (8) situés vers l'extérieur, pour le côté avant tourné dans la direction de déplacement et de travail (F) et les transferts tout en coupant plus les produits de récolte qui se trouvent dans leur zone de travail pour les recevoir et également les transférer.

5. Récolteuse agricole automotrice (1) selon l'une des revendications précédentes,
**caractérisée en ce que**
les plans de circulation (E1, E2, E3) des moyens de coupe et de transfert (7, 8) sont inclinés dans la direction de déplacement et de travail (F).

6. Récolteuse agricole automotrice (1) selon l'une des revendications précédentes 2 à 5,
**caractérisée en ce que**
les trajectoires enveloppent des éléments de coupe et de maintien (9, 10) de moyens de coupe et de transfert (7, 8) juxtaposés, d'un côté de l'appareil de récolte se chevauchent dans une zone partielle.

7. Récolteuse agricole automotrice (1) selon l'une des revendications précédentes,
**caractérisée en ce que**
les moyens de coupe et de transfert (7, 8) de l'appareil de récolte (2), qui sont juxtaposés transversalement à la direction de déplacement et de travail (F), sont décalés par leur côté avant dans la direction de déplacement et de travail (F) de façon que la distance du côté avant des moyens de coupe et de transfert (7), intérieurs de l'appareil de récolte (2) soient la plus faible en direction de la récolteuse (1).

8. Récolteuse agricole automotrice (1) selon l'une des revendications précédentes,
**caractérisée en ce que**
les moyens de coupe et de transfert (7, 8) de l'appareil de récolte (2) sont constitués par au moins deux convoyeurs sans fin passant sur deux poulies d'entraînement et de renvoi.

9. Récolteuse agricole automotrice (1) selon l'une des revendications précédentes,
**caractérisée en ce que**
les moyens de coupe et de transfert (7, 8) de l'appareil de récolte (2) entraînés en circulation, comportent des segments partiels (14) reliés de façon articulée, et qui sont superposés dans au moins deux plans (E1, E2, E3) avec dans chaque plan (E1, E2, E3) un élément de coupe ou de maintien (9, 10).

10. Récolteuse agricole automotrice (1) selon l'une quelconque des revendications précédentes,
**caractérisée en ce qu'**
au moins l'appareil de récolte (2) en deux parties peut passer d'une position de travail s'étendant transversalement à la direction de déplacement et de travail (F) dans une position de transport, de sorte que la récolteuse (1) ne dépasse pas le gabarit autorisé par la réglementation pour la circulation routière.

11. Récolteuse agricole automotrice (1) selon l'une quelconque des revendications précédentes,
**caractérisée en ce que**
l'appareil de récolte (2) qu'elle comprend est destiné de préférence à la récolte de maïs ou autres produits de récolte sur tige, analogues.
